Europäisches Patentamt

European Patent Office

Office européen des brevets

(11) Publication number: **0 586 948 A1**

# EUROPEAN PATENT APPLICATION

(21) Application number: **93113289.8**

(22) Date of filing: **19.08.93**

(51) Int. Cl.5: **C03C 14/00**, C03C 3/11, C03C 4/08

(30) Priority: **21.08.92 JP 245856/92**

(43) Date of publication of application:
**16.03.94 Bulletin 94/11**

(84) Designated Contracting States:
**BE DE FR GB**

(71) Applicant: **ASAHI GLASS COMPANY LTD.**
**1-2, Marunouchi 2-chome**
**Chiyoda-ku Tokyo 100(JP)**

(72) Inventor: **Sugimoto, Naoki, c/o Asahi Glass**
**Company Ltd.**
**Chuo Kenkyusho,**
**1150, Hazawa-cho,**
**Kanagawa-ku**
**Yokohama-shi, Kanagawa-ken(JP)**

Inventor: **Kondo, Yuki, c/o Asahi Glass**
**Company Ltd.**
**Chuo Kenkyusho,**
**1150, Hazawa-cho,**
**Kanagawa-ku**
**Yokohama-shi, Kanagawa-ken(JP)**

Inventor: **Manabe, Tsuneo, c/o Asahi Glass**
**Company Ltd.**
**Chuo Kenkyusho,**
**1150, Hazawa-cho,**
**Kanagawa-ku**
**Yokohama-shi, Kanagawa-ken(JP)**

(74) Representative: **Wächtershäuser, Günter, Dr.**
**Tal 29**
**D-80331 München (DE)**

(54) **Method for producing ultraviolet absorbing glass.**

(57) A method for producing ultraviolet absorbing glass, which comprises preparing mother glass having the following composition as represented by mol%:

| | |
|---|---|
| $SiO_2$ | 62-80% |
| $B_2O_3$ | 10-20% |
| $Al_2O_3$ | 1-10% |
| $Li_2O + Na_2O + K_2O$ | 5-15% |
| Copper oxide calculated as CuO | 0.01-2% |
| $Cl$ | 0-2% |
| Br | 0-2% |
| $Cl + Br$ | 0.01-2% |
| Tin oxide calculated as SnO | 0-3% |
| Antimony oxide calculated as $Sb_2O_3$ | 0-3% |
| Tin oxide calculated as SnO + Antimony oxide calculated as $Sb_2O_3$ | 0.01-3% |

wherein the ratio of the mol% of $Li_2O$ to the total mol% of $Li_2O + Na_2O + K_2O$ is at least 0.2, and heat-treating the mother glass to precipitate microcrystals of $CuCl$ or/and $CuBr$.

The present invention relates to a method for producing ultraviolet absorbing glass.

As ultraviolet screening glass, a commercially available product so-called ultraviolet absorbing glass, or a cover glass for protecting solar cells of an artificial satellite from ultraviolet rays, is known. Such glass products are designed to screen ultraviolet rays by utilizing the ability of glass doped with various ions to absorb lights of the ultraviolet region.

However, with such ion-doped glass, the changing rate in the transmittance of lights with wavelengths in the vicinity of the ultraviolet absorption range, is relatively blunt, whereby absorption of lights of the visible region can not be avoided to screen near ultraviolet rays, whereby the glass tends to be colored yellow. On the other hand, with colorless glass showing no absorption in the visible region, there has been a problem that near ultraviolet rays can not be screened. For the purpose of solving this problem, Japanese Examined Patent Publication No. 3464/1971 proposed ultraviolet absorbing glass with a small wavelength inclination width. This glass was characterized in that microcrystals of $CuCl$ or $CuBr$ were precipitated. However, it had problems such that the chemical durability of the glass was inadequate, and even if the chemical durability was acceptable, the glass tended to be colored blue, green or red. Further, when it was formed from the molten state by cooling, unless rapid cooling was employed, the glass underwent phase separation to have a haze, or copper colloid tended to precipitate to give a red color. Accordingly, the glass wad formed only by a specific forming method employing a high cooling rate. Therefore, it was impossible to produce it by a usual forming method such as a float method where the cooling is conducted under a mild condition.

Further, Japanese Unexamined Patent Publication No. 18501/1992 discloses colored glass comprising 52.5 wt% of $SiO_2$, 26.1 wt% of $B_2O_3$, 2.0 wt% of $Al_2O_3$, 0.5 wt% of $Li_2O$, 12.6 wt% of $Na_2O$, 0.8 wt% of $Y_2O_3$ and 5.5 wt% of $CuI$. However, this glass is colored and not colorless transparent.

It is an object of the present invention to solve such problems of the prior art and to provide a method for producing colorless transparent ultraviolet absorbing glass.

Thus, the present invention provides a method for producing ultraviolet absorbing glass, which comprises preparing a first mother glass having the following composition as represented by mol%:

| | |
|---|---|
| $SiO_2$ | 62-80% |
| $B_2O_3$ | 10-20% |
| $Al_2O_3$ | 1-10% |
| $Li_2O + Na_2O + K_2O$ | 5-15% |
| Copper oxide calculated as CuO | 0.01-2% |
| $Cl$ | 0-2% |
| Br | 0-2% |
| $Cl + Br$ | 0.01-2% |
| Tin oxide calculated as SnO | 0-3% |
| Antimony oxide calculated as $Sb_2O_3$ | 0-3% |
| Tin oxide calculated as SnO + Antimony oxide calculated as $Sb_2O_3$ | 0.01-3% |

wherein the ratio of the mol% of $Li_2O$ to the total mol% of $Li_2O + Na_2O + K_2O$ is at least 0.2, and heat-treating the mother glass to precipitate microcrystals of $CuCl$ or/and $CuBr$.

The present invention also provides a method for producing ultraviolet absorbing glass, which comprises preparing a second mother glass having the following composition as represented by mol%:

| | |
|---|---|
| SiO$_2$ | 50-80% |
| B$_2$O$_3$ | 10-30% |
| Al$_2$O$_3$ | 1-20% |
| Li$_2$O + Na$_2$O + K$_2$O | 5-20% |
| ZrO$_2$ | 0.3-10% |
| Copper oxide calculated as CuO | 0.01-2% |
| Cl | 0-2% |
| Br | 0-2% |
| Cl + Br | 0.01-2% |
| Tin oxide calculated as SnO | 0-3% |
| Antimony oxide calculated as Sb$_2$O$_3$ | 0-3% |
| Tin oxide calculated as SnO + Antimony oxide calculated as Sb$_2$O$_3$ | 0.01-3% |

wherein the ratio of the mol% of Li$_2$O to the total mol% of Li$_2$O + Na$_2$O + K$_2$O is at least 0.2, and heat-treating the mother glass to precipitate microcrystals of CuCl or/and CuBr.

The ultraviolet absorbing glass produced by the present invention contains CuCl or/and CuBr microcrystals showing a very sharp absorption in the ultraviolet region, precipitated in the glass, whereby it is possible to selectively screen ultraviolet rays without absorbing lights of the visible region. Further, even when the cooling rate during the forming is low, there will be no formation of a haze or no color change to red, whereby it is possible to use a float method excellent in the productivity.

Now, the present invention will be described in detail with reference to the preferred embodiments.

In the first mother glass, if SiO$_2$ is less than 62 mol%, glass tends to have a haze or tends to be colored by copper colloid, due to phase separation of the glass. On the other hand, if it exceeds 80 mol%, the glass melting temperature tends to be high, whereby evaporation of Cu as well as Cl and Br components will be substantial.

If B$_2$O$_3$ is less than 10 mol%, precipitation of CuCl and CuBr tends to be hardly attainable. On the other hand, if it exceeds 20 mol%, the chemical durability of the glass tends to be low. If Al$_2$O$_3$ is less than 1 mol%, the glass tends to have a haze due to phase separation. On the other hand, if Al$_2$O$_3$ exceeds 10 mol%, vitrification tends to be difficult.

With respect to Li$_2$O, Na$_2$O and K$_2$O, Li$_2$O may be used alone, or two or more of them may be used in combination if the ratio of the mol% of Li$_2$O to the total mol% of Li$_2$O + Na$_2$O + K$_2$O in the glass composition is at least 0.2. If the total amount is less than 5 mol%, the glass melting temperature tends to be high, and evaporation of Cu as well as Cl and Br components tends to be substantial. On the other hand, if the total amount exceeds 15 mol%, copper colloid tends to precipitate in the glass, whereby the glass tends to be colored red, and the chemical durability tends to be low. If the ratio of the mol% of Li$_2$O to the total mol% of Li$_2$O + Na$_2$O + K$_2$O in the glass composition is less than 0.2, precipitation of CuCl and CuBr tends to be hardly attainable.

Further, in order to precipitate microcrystals of CuCl or/and CuBr in the glass, it is necessary to incorporate from 0.01 to 2 mol% of copper oxide calculated as CuO and from 0.01 to 2 mol% in total of Cl and Br. If the copper oxide is less than 0.01 mol%, no adequate precipitation of microcrystals of CuCl or/and CuBr will be attained, whereby no adequate screening performance of ultraviolet rays can be obtained. On the other hand, even if it exceeds 2 mol%, no further improvement in the ultraviolet ray screening performance can be expected, and on the contrary, large particles of CuCl or/and CuBr crystals tend to precipitate, whereby the transparency of the glass tends to be impaired. The proportions of Cl and Br are suitably selected depending upon the wavelength to be screened.

If the total amount of Cl and Br is less than 0.01 mol%, no, adequate precipitation of microcrystals of CuCl or/and CuBr will be attained, whereby the ultraviolet screening performance tends to be inadequate. On the other hand, even if it exceeds 2 mol%, no further improvement in the ultraviolet ray screening performance will be obtained, and on the contrary, phase separation of the glass is likely to result, whereby the transparency of the glass is likely to be lost. Further, Cl and Br may be used alone, respectively.

By incorporating from 0.01 to 3 mol% in total of tin oxide calculated as SnO and antimony oxide calculated as Sb$_2$O$_3$ in addition to the above components, precipitation of microcrystals of CuCl or/and CuBr will be facilitated without coloring the glass. If the total amount of the tin oxide and the antimony oxide is less than 0.01 mol%, the glass tends to be colored blue. On the other hand, if it exceeds 3 mol%, the glass tends to be colored red. Further, the tin oxide and the antimony oxide may be used alone, respectively.

Among such ranges, mother glass comprising from 63 to 72 mol% of $SiO_2$, from 12 to 18 mol% of $B_2O_3$, from 2 to 8 mol% of $A\ell_2O_3$, from 7 to 13 mol% of $Li_2O + Na_2O + K_2O$, from 0.1 to 2 mol% of the copper oxide, from 0.1 to 1.5 mol% in total of $C\ell$ and Br, and from 0.05 to 2 mol% in total of the tin oxide and the antimony oxide, wherein the ratio of the mol% of $Li_2O$ to the total mol% of $Li_2O + Na_2O + K_2O$ in the glass composition is at least 0.25, is particularly preferred, since such glass has a colorless transparent outer appearance, and microcrystals of $CuC\ell$ or/and CuBr with a controlled diameter, can readily be precipitated.

The diameter of the microcrystals of $CuC\ell$ or/and CuBr to be precipitated, is preferably from 0.5 to 400 nm. If the diameter is less than 0.5 nm, absorption by $CuC\ell$ or/and CuBr will be inadequate, and the expected screening of ultraviolet rays will be inadequate. On the other hand, if it exceeds 400 nm, visible lights tend to scatter in the glass, whereby the transparency of the glass will be lost, such being undesirable. Within this range, a diameter of from 1 to 100 nm is particularly preferred, since it is thereby possible to adequately screen ultraviolet rays and at the same time the glass will be transparent to visible lights.

The following substances may, for example, be mentioned as raw materials to be used for the preparation of the mother glass.

As a silicon raw material, not only a silicon oxide such as silicon dioxide, but also a nitride, an organic silicon compound or a silicate such as an alkali metal silicate may be used in combination with other alkali compound.

As a boric acid raw material, not only boric acid ($H_3BO_3$) and an oxide such as boric anhydride ($B_2O_3$), but also a nitride, an organic boron compound or a borate such as alkali metal borate, may be used in combination with other alkali compound.

As an aluminum raw material, not only a hydroxide or oxide such as aluminum hydroxide ($A\ell(OH)_3$) or alumina ($A\ell_2O_3$), but also a nitride or an organic aluminum compound, may be used.

As an alkali metal raw material, a carbonate may be mentioned as a typical example. However, other alkali compound such as a hydroxide or chloride, may suitably be employed.

As raw materials for copper, chlorine and bromine, a copper chloride or bromide such as $CuC\ell$, $CuC\ell_2$, CuBr or $CuBr_2$, may be employed. Further, a single substance of copper or an oxide, hydroxide, inorganic salt such as sulfate or organic salt of copper, may be employed as a copper raw material. Further, chlorine and bromine may be supplied as an alkali metal chloride, an alkali metal bromide, ammonium chloride, ammonium bromide, or a chloride or bromide of other components. Still further, chlorine and bromine may be introduced by reacting it with the glass in the form of a single substance or a gas of a chloride or bromide.

As a tin raw material, not only an oxide such as stannous oxide (SnO) or stannic oxide ($SnO_2$), but also a chloride of tin or an organic tin compound, may be used.

As an antimony raw material, an oxide such as diantimony trioxide or diantimony pentoxide, a composite oxide such as sodium pyroantimonate, a chloride of antimony, or an organic antimony compound, may be used.

For the production of this first mother glass, a method may be employed wherein the prescribed amounts of the above-mentioned various raw materials are weighed and mixed, and the mixture is heated and melted at a temperature of from 1200 to 1800 °C for from 5 minutes to 10 hours, followed by molding the melt into a predetermined shape. For the forming, a pressing method, a roll out method or a float method may be employed. Among them, the float method is particularly preferred as described hereinafter.

The mother glass thus formed, is subjected to heat treatment to precipitate microcrystals of $CuC\ell$ or/and CuBr. This heat treatment can be accomplished by maintaining the mother glass at a temperature of from 450 to 800 °C for from 5 minutes to 50 hours. In this heat treatment, the higher the heat-treatment temperature, and the longer the heat-treatment time, the larger the precipitating microcrystals of $CuC\ell$ and CuBr become. As a method for the heat treatment, either a method which comprises cooling the formed mother glass once to room temperature and then heating it and maintaining it at a predetermined temperature to precipitate microcrystals, or a method which comprises maintaining the mother glass at a predetermined temperature during the process of cooling it after forming to room temperature, or controlling the cooling rate, to precipitate microcrystals, may be employed.

The first mother glass is suitable particularly for the production of ultraviolet absorbing glass by a float method.

Namely, various raw materials are mixed to have the composition of the first mother glass, the mixture is then continuously supplied from one end of a melting furnace, followed by heating and melting to obtain the first mother glass. Then, this molten mother glass is supplied onto the surface of a molten metal bath in a molten metal bath tank connected to the other end of the melting furnace. The mother glass supplied onto the surface of the molten metal bath is formed into a glass ribbon having a predetermined thickness, as it advances. Then, the glass ribbon is withdrawn from the surface of the molten metal bath and transferred to a lehr, whereupon the glass ribbon is annealed and at the same time microcrystals of $CuCl$ or/and $CuBr$ will precipitate in the glass ribbon.

On the other hand, the second mother glass is defined for the following reasons.

If $SiO_2$ is less than 50 mol%, the chemical durability of the glass tends to be inadequate. On the other hand, if it exceeds 80 mol%, the glass melting temperature tends to be high, whereby Cu as well as $Cl$ and Br components will be evaporated.

If $B_2O_3$ is less than 10 mol%, precipitation of $CuCl$ and $CuBr$ tends to be hardly attained. On the other hand, if it exceeds 30 mol%, the chemical durability of the glass tends to be low. If $Al_2O_3$ is less than 1 mol%, the glass tends to have a haze due to phase separation. On the other hand, if $Al_2O_3$ exceeds 20 mol%, vitrification tends to be difficult.

With respect to $Li_2O$, $Na_2O$ and $K_2O$, $Li_2O$ may be used alone, or two or more of them may be used in combination if the ratio of the mol% of $Li_2O$ to the total mol% of $Li_2O + Na_2O + K_2O$ in the glass composition is at least 0.2. However, if the total amount is less than 5 mol%, the glass melting temperature tends to be high, whereby Cu as well as $Cl$ and Br components will evaporate. On the other hand, if the total amount exceeds 20 mol%, the chemical durability of the glass tends to be low.

If $ZrO_2$ is less than 0.3 mol%, a haze is likely to form due to phase separation during the forming of glass, or the glass tends to be colored red due to precipitation of copper colloid during the heat treatment. On the other hand, if it exceeds 10 mol%, the glass melting temperature tends to be high, whereby Cu as well as $Cl$ and Br components will evaporate.

Among such ranges, glass comprising from 55 to 75 mol% of $SiO_2$, from 12 to 25 mol% of $B_2O_3$, from 2 to 15 mol% of $Al_2O_3$, from 7 to 17 mol% of $Li_2O + Na_2O + K_2O$, from 0.3 to 3 mol% of $ZrO_2$, from 0.1 to 1.8 mol% of $CuO$, from 0.05 to 2 mol% of $SnO + Sb_2O_3$ and from 0.1 to 1.5 mol% of $Cl$ or/and Br, wherein the ratio of the mol% of $Li_2O$ to the total mol% of $Li_2O + Na_2O + K_2O$ in the glass composition is at least 0.25, is particularly preferred, since it is thereby possible to readily precipitate microcrystals of $CuCl$ or/and $CuBr$ having a controlled particle size.

The diameter of the microcrystals of $CuCl$ or/and $CuBr$ to be precipitated, is preferably from 0.5 to 400 nm. If the diameter is less than 0.5 nm, absorption by $CuCl$ or/and $CuBr$ will be inadequate, and the expected screening of ultraviolet rays will be inadequate. On the other hand, if it exceeds 400 nm, visible lights will be scattered in the glass, whereby the transparency of the glass will be lost, such being undesirable. Within this range, a diameter of from 1 to 100 nm is particularly preferred, since it is thereby possible to adequately screening ultraviolet rays, and at the same time the glass will be transparent to visible lights.

For the production and heat treatment of such second mother glass, the same methods as for the first mother glass, may be employed.

For forming such second mother glass, a pressing method or a roll out method is particularly suitable.

The ultraviolet absorbing glass produced by the present invention, may be used, for example, as window glasses for buildings and vehicles, filters for optical instruments, tubes or lenses for metal halide lamps.

Now, the present invention will be described in further detail with reference to Examples. However, it should be understood that the present invention is by no means restricted to such specific Examples.

EXAMPLES 1 to 18

Raw materials were mixed to have 400 g of glass with a composition as identified in Table 1, and the mixture was put into a platinum crucible, melted at 1450°C for 2 hours and then cast on a stainless steel plate to form a sheet glass. This sheet glass was heat-treated at the temperature and the time as identified in Table 1, or cooled after casting to a temperature below the glass transition temperature at a cooling rate as identified in Table 1, to precipitate microcrystals in the glass. The outer appearance of the glass having the microcrystals precipitated, was observed. At the same time, the glass was polished to a thickness of 1 mm, and its transmittance was measured to determine the wavelength at which the transmittance was 50% and the wavelength inclination width within which the transmittance changed from 80% to 10%. The diameter of microcrystals in the glass was measured by inspection by means of a transmission electron microscope. Further, measurement of the critical cooling rate at which the glass did not undergo phase separation to form a haze or to undergo color change to red due to precipitation of copper colloid at the time of cooling the melt from $10^3$ poise to $10^7$ poise, was conducted. When this critical cooling rate is not higher than 100°C/min, it is possible to obtain colorless transparent ultraviolet absorbing glass by a float

5

method. The outer appearance and other measured values are shown in Table 1.

COMPARATIVE EXAMPLES 1 to 8

Glass having a composition as identified in Table 1 was prepared in the same manner as in the preceding Examples, and the outer appearance was inspected, and the transmittance and the critical cooling rate were determined. As a result, such glass was colored red by absorption of lights around 570 nm by copper colloid formed in the glass, or opacified due to phase separation of the glass. Further, the critical cooling rate of the melt was higher than 100°C/min.

According to the present invention, it is possible to produce colorless glass having high transmittance of lights of the visible region, which is excellent in the performance of screening ultraviolet rays.

Table 1

| | | Example | | | | | | | | |
|---|---|---|---|---|---|---|---|---|---|---|
| | | 1 | 2 | 3 | 4 | 5 | 6 | 7 | 8 | 9 |
| Composition (mol%) | $SiO_2$ | 69.0 | 67.0 | 70.0 | 69.2 | 69.4 | 63.5 | 72.0 | 65.5 | 67.0 |
| | $B_2O_3$ | 15.5 | 12.0 | 15.7 | 15.5 | 16.3 | 17.0 | 13.0 | 15.0 | 15.0 |
| | $A\ell_2O_3$ | 4.1 | 8.0 | 2.0 | 4.1 | 4.2 | 5.0 | 2.5 | 4.0 | 4.5 |
| | $Li_2O$ | 3.1 | 4.0 | 2.5 | 3.1 | 2.9 | 6.0 | 12.0 | 4.3 | 3.0 |
| | $Na_2O$ | 3.6 | 3.0 | 3.5 | 3.6 | 3.0 | 4.0 | – | 3.2 | 4.0 |
| | $K_2O$ | 3.1 | 3.7 | 4.0 | 3.1 | 2.7 | 3.0 | – | 3.0 | 3.0 |
| | $ZrO_2$ | – | – | – | – | – | – | – | – | 1.0 |
| | $CuO$ | 0.4 | 0.7 | 0.7 | 0.4 | 0.2 | 0.3 | 0.1 | 1.5 | 1.0 |
| | $C\ell$ | 0.7 | – | – | 0.7 | 0.4 | 0.8 | 0.2 | 1.5 | 1.0 |
| | $Br$ | – | 0.8 | 0.8 | – | 0.4 | – | – | – | – |
| | $SnO$ | 0.5 | 0.8 | 0.8 | – | 0.5 | 0.2 | 0.2 | 2.0 | 0.5 |
| | $Sb_2O_3$ | – | | | 0.3 | | 0.2 | | | |
| $Li_2O/R_2O$ | | 0.32 | 0.37 | 0.25 | 0.32 | 0.34 | 0.46 | 1.0 | 0.41 | 0.3 |
| Cooling rate (°C/min) | | 10 | 20 | – | 10 | – | – | – | – | – |
| Heat treatment temp. (°C) | | – | – | 700 | – | 550 | 600 | 650 | 540 | 600 |
| Heat treatment time (hr) | | – | – | 0.5 | – | 4 | 1 | 2 | 1 | 0.5 |
| Diameter of microcrystals (nm) | | 10 | 20 | 20 | 10 | 10 | 8 | 6 | 20 | 5 |
| Wavelength for 50% transmittance (nm) | | 385 | 415 | 415 | 385 | 400 | 380 | 375 | 390 | 390 |
| Wavelength inclination width (nm) | | 10 | 10 | 8 | 10 | 10 | 10 | 12 | 8 | 10 |
| Color of glass | | Colorless | Colorless | Colorless | Colorless | Colorless | Colorless | Colorless | Colorless | Colorless |
| Critical cooling rate (°C/min) | | 20 | 20 | 20 | 25 | 15 | 40 | 40 | 40 | 80 |

Table 1 (continued)

| Composition (mol%) | | Example | | | | | | | | |
|---|---|---|---|---|---|---|---|---|---|---|
| | | 10 | 11 | 12 | 13 | 14 | 15 | 16 | 17 | 18 |
| Composition (mol%) | $SiO_2$ | 55.0 | 55.0 | 62.0 | 62.0 | 61.0 | 75.0 | 55.0 | 55.0 | 61.3 |
| | $B_2O_3$ | 19.0 | 19.0 | 15.5 | 15.5 | 15.0 | 12.0 | 24.0 | 10.0 | 17.7 |
| | $A\ell_2O_3$ | 9.0 | 9.0 | 6.0 | 6.0 | 6.0 | 2.0 | 3.0 | 15.0 | 4.5 |
| | $Li_2O$ | 5.0 | 5.0 | 4.0 | 4.0 | 4.0 | 1.5 | 17.0 | 1.0 | 4.0 |
| | $Na_2O$ | 8.0 | 8.0 | 4.0 | 4.0 | 4.0 | 4.5 | | 1.0 | 4.2 |
| | $K_2O$ | – | – | 4.0 | 4.0 | 4.0 | | | 0.5 | 3.5 |
| | $ZrO_2$ | 0.5 | 0.5 | 3.0 | 3.0 | 3.0 | 1.0 | 0.7 | 1.0 | 2.9 |
| | $CuO$ | 1.5 | 1.5 | 0.5 | 0.5 | 1.0 | 1.0 | 0.1 | 1.0 | 0.3 |
| | $C\ell$ | 1.0 | 1.0 | 0.5 | 0.25 | – | 1.0 | 0.1 | | 0.7 |
| | $Br$ | – | – | – | 0.25 | 1.0 | | | 0.5 | |
| | $SnO$ | 1.0 | 1.0 | 0.5 | 0.5 | 1.0 | 2.0 | 0.1 | | 0.5 |
| | $Sb_2O_3$ | | | | | | | | | |
| $Li_2O/R_2O$ | | 0.38 | 0.38 | 0.33 | 0.33 | 0.33 | 0.25 | 1.0 | 0.88 | 0.34 |
| Cooling rate (°C/min) | | – | – | – | – | – | – | – | – | 10 |
| Heat treatment temp. (°C) | | 500 | 600 | 550 | 550 | 580 | 750 | 500 | 700 | – |
| Heat treatment time (hr) | | 0.5 | 1 | 1 | 1 | 1 | 1 | 1 | 3 | – |
| Diameter of microcrystals (nm) | | 10 | 20 | 7 | 10 | 20 | 10 | 5 | 100 | 10 |
| Wavelength for 50% transmittance (nm) | | 395 | 405 | 385 | 400 | 420 | 385 | 390 | 400 | 380 |
| Wavelength inclination width (nm) | | 10 | 10 | 8 | 9 | 8 | 10 | 10 | 10 | 10 |
| Color of glass | | Colorless | Colorless | Colorless | Colorless | Colorless | Colorless | Colorless | Colorless | Colorless |
| Critical cooling rate (°C/min) | | 90 | 90 | 65 | 60 | 70 | 80 | 60 | 80 | 60 |

Table 2

| Composition (mol%) | | Comparative Example | | | | | | | |
|---|---|---|---|---|---|---|---|---|---|
| | | 1 | 2 | 3 | 4 | 5 | 6 | 7 | 8 |
| Composition (mol%) | SiO$_2$ | 58.0 | 56.7 | 60.0 | 63.1 | 68.2 | 61.4 | 60.5 | 73.0 |
| | B$_2$O$_3$ | 17.2 | 19.2 | 17.8 | 18.7 | 15.3 | 18.2 | 18.5 | 12.4 |
| | Aℓ$_2$O$_3$ | 8.2 | 2.9 | 6.5 | 5.7 | 2.1 | 8.7 | 6.5 | 3.1 |
| | Li$_2$O | 10.0 | – | – | – | – | 10.6 | 4.0 | 1.1 |
| | Na$_2$O | – | 13.9 | 10.0 | – | 6.4 | – | 4.0 | 6.6 |
| | K$_2$O | – | 3.9 | – | 10.4 | 3.9 | – | 4.0 | 2.1 |
| | ZrO$_2$ | – | – | – | – | – | – | – | 0.3 |
| | CuO | 0.47 | 3.1 | 0.5 | 0.93 | 2.5 | 0.4 | 1.0 | 0.5 |
| | Cℓ | 1.52 | – | 1.57 | 0.93 | – | 0.5 | 1.0 | – |
| | Br | – | 3.1 | – | – | 1.5 | – | – | 0.5 |
| | SnO | 0.29 | – | 0.3 | 0.24 | – | 0.2 | 0.5 | 0.5 |
| | Sb$_2$O$_3$ | – | – | – | – | – | – | – | – |
| | F | 4.25 | – | 4.4 | – | – | – | – | – |
| | ZnO | – | 0.95 | – | – | – | – | – | – |
| Li$_2$O/R$_2$O | | 1.0 | 0 | 0 | 0 | 0 | 1 | 0.33 | 0.11 |
| Cooling rate (°C/min) | | – | – | – | – | | – | – | – |
| Heat treatment temp. (°C) | | 550 | 550 | 500 | 550 | 550 | 600 | 600 | 580 |
| Heat treatment time (hr) | | 5 | 0.5 | 5 | 1 | 2 | 0.5 | 1 | 1 |
| Diameter of microcrystals (nm) | | – | 7 | 2 | 10 | 2 | 1 | 2 | 3 |
| Wavelength for 50% transmittance (nm) | | 385 | 420 | 380 | 380 | 400 | 390 | 400 | 370 |
| Wavelength inclination width (nm) | | 50 | 20 | 40 | 25 | 30 | 40 | 50 | 40 |
| Color of glass | | Red | Green | Red | Red | Blue | Haze | Haze | Red |
| Critical cooling rate (°C/min) | | 120 | 150 | 130 | 140 | 140 | 170 | 140 | 120 |

## Claims

1. A method for producing ultraviolet absorbing glass, which comprises preparing mother glass having the following composition as represented by mol%:

| SiO$_2$ | 62-80% |
|---|---|
| B$_2$O$_3$ | 10-20% |
| Al$_2$O$_3$ | 1-10% |
| Li$_2$O + Na$_2$O + K$_2$O | 5-15% |
| Copper oxide calculated as CuO | 0.01-2% |
| Cl | 0-2% |
| Br | 0-2% |
| Cl + Br | 0.01-2% |
| Tin oxide calculated as SnO | 0-3% |
| Antimony oxide calculated as Sb$_2$O$_3$ | 0-3% |
| Tin oxide calculated as SnO + Antimony oxide calculated as Sb$_2$O$_3$ | 0.01-3% |

wherein the ratio of the mol% of Li$_2$O to the total mol% of Li$_2$O + Na$_2$O + K$_2$O is at least 0.2, and heat-treating the mother glass to precipitate microcrystals of CuCl or/and CuBr.

2. The method for producing ultraviolet absorbing glass according to Claim 1, wherein the diameter of the microcrystals of CuCl or/and CuBr to be precipitated is from 0.5 to 400 nm.

3. A method for producing ultraviolet absorbing glass, which comprises preparing mother glass having the following composition as represented by mol%:

| SiO$_2$ | 50-80% |
|---|---|
| B$_2$O$_3$ | 10-30% |
| Al$_2$O$_3$ | 1-20% |
| Li$_2$O + Na$_2$O + K$_2$O | 5-20% |
| ZrO$_2$ | 0.3-10% |
| Copper oxide calculated as CuO | 0.01-2% |
| Cl | 0-2% |
| Br | 0-2% |
| Cl + Br | 0.01-2% |
| Tin oxide calculated as SnO | 0-3% |
| Antimony oxide calculated as Sb$_2$O$_3$ | 0-3% |
| Tin oxide calculated as SnO + Antimony oxide calculated as Sb$_2$O$_3$ | 0.01-3% |

wherein the ratio of the mol% of Li$_2$O to the total mol% of Li$_2$O + Na$_2$O + K$_2$O is at least 0.2, and heat-treating the mother glass to precipitate microcrystals of CuCl or/and CuBr.

4. The method for producing ultraviolet absorbing glass according to Claim 3, wherein the diameter of the microcrystals of CuCl or/and CuBr to be precipitated is from 0.5 to 400 nm.

5. A method for producing ultraviolet absorbing glass, which comprises continuously supplying a melt of the mother glass as defined in Claim 1 onto the surface of a molten metal bath so that it forms a glass ribbon as it advances on the surface of the molten metal bath, withdrawing the glass ribbon from the surface of the molten metal bath and transporting it to a lehr, and annealing the glass ribbon and precipitating microcrystals of CuCl or/and CuBr therein on the lehr.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-5 024 974 (ASAHI GLASS COMPANY LTD.) * claims; example 1 * | 1-5 | C03C14/00 C03C3/11 C03C4/08 |
| D,A | EP-A-0 456 351 (ISUZU GLASS CO. LTD.) * the whole document * | 1-5 | |
| A | CHEMICAL ABSTRACTS, vol. 114, no. 4, 28 January 1991, Columbus, Ohio, US; abstract no. 28567m, page 275 ; * abstract * & CERAM. TRANS. vol. 1990, no. 14 , 1990 , USA pages 151 - 156 J.A. RULLER ET AL. 'OPTICAL STUDIES OF QUANTUM-CONFINED COPPER(I)CHLORIDE AND CUCL(X)BR(1-X) GLASS COMPOSITES' | 2,4 | |
| P,A | DATABASE WPI Week 9321, Derwent Publications Ltd., London, GB; AN 93172768 & JP-A-5 105 865 (ISUZU SEIKO GLASS KK) 27 April 1993 * abstract * | 1 | **TECHNICAL FIELDS SEARCHED** (Int.Cl.5) C03C |

The present search report has been drawn up for all claims

| Place of search | Date of completion of the search | Examiner |
|---|---|---|
| THE HAGUE | 17 December 1993 | Reedijk, A |

EPO FORM 1503 03.82 (P04C01)